# EUROPÄISCHE PATENTSCHRIFT

(11) **EP 2 777 868 B1**
(45) Veröffentlichungstag und Bekanntmachung des Hinweises auf die Patenterteilung: **09.12.2015**
(21) Anmeldenummer: 14154342.1
(22) Anmeldetag: 07.02.2014
(51) Int. Cl.: B23P 11/02, F01L 1/047, F16B 4/00, F16D 1/08, F16H 53/02

(54) **Vorrichtung zur Positionierung zumindest eines Funktionselements und Verfahren zum thermischen Fügen einer Welle mit einem oder mehreren jeweils eine Nabe für die Welle aufweisenden Funktionselementen**
Device for positioning at least one functional element and methods for thermally joining a shaft with one or more functional elements each having a hub for the shaft.
Dispositif de positionnement d'au moins un élément fonctionnel et procédé d'assemblage thermique d'un arbre avec des éléments fonctionnels ayant chacun un moyeu pour l'arbre

(30) Priorität: 11.03.2013 DE 102013204116
(43) Veröffentlichungstag der Anmeldung: 17.09.2014
(73) Patentinhaber: Mahle International GmbH, 70376 Stuttgart (DE)
(72) Erfinder: Menonna, Antonio, 71254 Ditzingen (DE)
(74) Vertreter: BRP Renaud & Partner mbB Rechtsanwälte Patentanwälte Steuerberater

(56) Entgegenhaltungen:
- DE-A1-102007 056 638
- DE-A1-102008 064 194
- DE-A1-102011 106 981
- GB-A- 2 205 054
- JP-A- 2000 073 709

## Beschreibung

Die vorliegende Erfindung betrifft eine Vorrichtung zur Positionierung zumindest eines eine Nabe für eine Welle aufweisenden Funktionselements, insbesondere eines Nockens, gemäß dem Oberbegriff des Anspruchs 1. Die Erfindung betrifft auch verfarhen zum thermischen Fügen einer Welle mit einem oder mehreren jeweils eine Nabe für die Welle aufweisenden Funktionselementen. Aus der DE 10 2008 064 194 A1 ist eine gattungsgemäße Vorrichtung zur Positionierung zumindest eines eine Ausnehmung für eine Welle aufweisenden Funktionselements in einer vorbestimmten Winkelposition auf der Welle bekannt, wobei die Vorrichtung eine für ein Funktionselement bestimmte Aufnahme aufweist.

Aus der DE 10 2007 056 638 A1 ist eine weitere Vorrichtung zur Montage von einem Verbund, bestehend aus mindestens einer Funktionselemente tragenden Welle und einem diese in ungeteilten lagerabstützenden Gehäuse bekannt, wobei das Gehäuse Positioniereinrichtungen besitzt, die vor dem Fügen die Funktionselemente so in vorbestimmter Phasenlage im Gehäuse halten, dass die mindestens eine Welle durch die Lager des Gehäuses und Öffnungen in den Funktionselementen einschiebbar ist. Die Positioniereinrichtung ist dabei mit Ausnehmungen für die Funktionselemente versehen, die einen Anschlag besitzen, der das Funktionselement entgegen der Fügerichtung der Welle abstützt, wobei die Ausnehmung der Positioniereinrichtungen eine Teilkontur der Kontur der Funktionselemente als Negativprofil besitzen, so dass die Funktionselemente in einer Phasenlage gemäß ihrer späteren Fügeposition gehalten werden können. Die Teilkontur der Ausnehmungen umgreift dabei die Funktionselemente zumindest auf einem Teil von deren Außenkontur. Hierdurch soll eine besonders phasengenaue Positionierung erzielt werden können.

Aus der DE 10 2009 060 350 A1 ist eine Vorrichtung zur Montage einer Funktionselemente tragenden Welle bekannt, wobei die Vorrichtung eine Maschinenplattform umfasst, auf der eine Mehrzahl von Positionierscheiben zur fluchtenden, lagerichtigen Positionierung der Funktionselemente derart angeordnet, dass eine Welle einschiebbar ist. Die Positionierscheiben sind reversibel auf einem Rahmen fixiert, der seinerseits reversibel auf der Maschinenplattform fixiert ist. Dadurch soll durch vorhalten mehrerer Rahmen ein schneller Wechsel eines Produktionsprozesses ermöglicht werden.

Aus der DE 10 2006 036 140 A1 ist eine Vorrichtung zum Zentrieren von Werkstücken bekannt, mit einem Zentrierdorn, der in einer Spindel einer Bearbeitungsmaschine eingesetzt ist. Die Betätigung des Zentrierdorns bzw. seiner Zentrierelemente erfolgt dabei mit der in der Spindel ohnehin vorhandenen Verstelleinrichtung, so dass eine zusätzliche Zentriereinheit an der Bearbeitungsmaschine nicht mehr erforderlich ist.

Aus der DE 10 2011 106 981 A1 ist eine Vorrichtung zum Herstellen einer Fügeverbindung von wenigstens einem eine Bohrung aufweisenden Fügeteil mit einer Welle bekannt, wobei die Vorrichtung eine Fügeeinrichtung mit einem ersten Greifer zum Greifen der Welle und einen zweiten Greifer zum lageorientierten Greifen des Fügeteils besitzt. Die Welle ist dabei an einem Ende in einem drehantreibbar gelagerten Spannmittel zentrisch eingespannt und wird an dem anderen Ende mit einer Zentrierspitze zentriert, wobei das Fügeteil auf eine gewünschte Temperatur erhitzt wird und die Bohrung sich auf ein Übermaß gegenüber dem Wellendurchmesser aufweitet. Hierdurch soll insbesondere eine Vorrichtung geschaffen werden können, mit welcher ein Fügeprozess optimiert werden kann.

Aus der EP 1 392 469 B1 ist ein Verfahren zur drehfesten Befestigung eines eine Bohrung aufweisenden Triebteils auf einer Welle bekannt, wobei die Welle durch die Bohrung des bzw. der Triebteile ragt. Die Fügeverbindung erfolgt dabei mittels Schrumpfen.

Nachteilig bei den Vorrichtungen, die in den obengenannten Dokumenten beschrieben sind, ist jedoch ein vergleichsweise aufwändiges Führen der Welle beim thermischen Fügen.

Die vorliegende Erfindung beschäftigt sich mit dem Problem für eine Vorrichtung der gattungsgemäßen Art eine verbesserte oder zumindest eine alternative Ausführungsform anzugeben, die insbesondere einen optimierten Fügeprozess erlaubt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine gattungsgemäße Vorrichtung mit einem Reitstock zur koaxialen Ausrichtung einer Welle in Bezug auf eine Nabe zumindest eines Funktionselements auszustatten, wobei der Reitstock derart ausgebildet ist, dass er sowohl die Welle als auch die Funktionselemente relativ zur Welle ausrichten kann. Die Vorrichtung ist somit zur Positionierung zumindest eines eine Nabe für die Welle aufweisenden Funktionselements, beispielsweise eines Nockens auf einer Nockenwelle, in einer vorbestimmten Winkelposition ausgebildet, wobei zumindest eine Aufnahme vorgesehen ist, in welche das Funktionselement eingelegt werden kann. Der erfindungsgemäß vorgesehene Reitstock besitzt einen axial in Bezug auf diesen verstellbaren Zentrierkonus für die Welle sowie zusätzlich expandierbare Zentrierelemente zum Zentrieren des Funktionselements, wobei der Zentrierkonus derart mit den Zentrierelementen gekoppelt ist, dass bei einem axialen Verstellen des Zentrierkonus die Zentrierelemente in Radialrichtung bewegt werden. Stößt somit der Reitstock und an dessen vorderstem Ende der Zentrierkonus angeordnet ist, an eine Stirnseite der Welle, wird der Zentrierkonus teilweise in die Welle geschoben und zentriert dadurch diese, wobei gleichzeitig ein axiales Verschieben des Zentrierkonus und dadurch ein radiales Ausfahren der Zentrierelemente erfolgt. In ausgefahrener Stellung befinden sich die Zentrierelemente in einer definierten Position und ergeben so ein festgelegtes Spiel zur Nabe beziehungsweise werden die Zentrierelemente gegen die Nabe im Funktionselement verspannt und fixieren darüber das Funktionselement. Zusätzlich weist die erfindungsgemäße Vorrichtung einen verfahrbaren Führungsschlitten für die Welle auf, mittels welchem die Welle zum Fügen simultan mit dem Reitstock verschoben und insbesondere durch die Nabe des zumindest einen Funktionselements geschoben werden kann. Mit der erfindungsgemäßen Vorrichtung ist es nun möglich, eine exakte Ausrichtung der Nabe und damit des Funktionselements, beispielsweise des Nockens, durch die Reitstockspitze durchführen zu lassen. Die Zentrierelemente an der Reitstockspitze sind dabei derart ausgebildet, dass sie in ausgefahrenem Zustand gegen die Nabe ein sehr geringes Spiel einnehmen oder gegen die Nabe des Funktionselements verklemmt sind, wogegen sie in eingefahrenem Zustand problemlos die Naben der Nocken bzw. der Funktionselemente passieren können. Das Ausfahren der Zentrierelemente erfolgt durch das Anfahren des Wellenendes an die Reitstockspitze, d.h. durch das Anstoßen der Stirnseite der Welle an den Zentrierkonus. Hierdurch wird der Zentrierkonus, der die Welle zentriert, ein klein wenig in axialer Richtung eingefahren, was wiederum das radiale Ausfahren der Zentrierelemente, beispielsweise aus einer entsprechenden Verstellmechanik oder einer pneumatischen bzw. hydraulischen Stelleinrichtung bewirkt. Mit dem erfindungsgemäßen Reitstock lässt sich somit der Zentriervorgang der Funktionselemente relativ zur Welle deutlich vereinfachen und damit der Fügeprozess insgesamt optimieren.

Zweckmäßig sind zumindest drei Zentrierelemente an der Reitstockspitze vorgesehen. Drei Zentrierelemente sind dabei mindestens erforderlich, um die Nabe des jeweiligen Funktionselements optimal zur Welle ausrichten zu können. Selbstverständlich sind dabei die Zentrierelemente bzw. ein diese betätigender Verstellmechanismus derart ausgebildet, dass bei einem axialen Verstellen des Zentrierkonus ein gleichmäßiges radiales Verstellen der Zentrierelemente erfolgt. Selbstverständlich können auch vier oder mehr Zentrierelemente vorgesehen sein.

Bei einer weiteren vorteilhaften Ausführungsform der erfindungsgemäßen Lösung ist eine Federeinrichtung vorgesehen, die zumindest ein Zentrierelement, vorzugsweise sämtliche Zentrierelemente, in seine ausgefahrene bzw. ihre ausgefahrenen Stellungen vorspannt. Hierdurch kann eine definierte Anpresskraft der Zentrierelemente und damit eine definierte Fixierkraft für die Funktionselemente erreicht werden. Die zumindest eine Federeinrichtung kann dabei in die Reitstockspitze integriert sein.

Generell können die Funktionselemente als Ausgleichsmassen, Zahnräder oder Lager, oder aber auch als Nocken ausgebildet sein, wobei diese Aufzählung nicht abschließend verstanden werden soll, sondern auch noch weitere Funktionselemente, insbesondere im Bereich von Nockenwellen, wie beispielsweise Geberräder, mit der erfindungsgemäßen Vorrichtung gefügt werden können.

Die vorliegende Erfindung beruht weiter auf dem allgemeinen Gedanken, ein neuartiges Verfahren zum thermischen Fügen einer Welle mit zumindest einem eine derartige Nabe für die Welle aufweisenden Funktionselement unter Nutzung der zuvor beschriebenen Vorrichtung anzugeben. Bei einem derartigen erfindungsgemäßen Verfahren wird zunächst die Welle gekühlt bzw. das Funktionselement erhitzt, woraufhin anschließend das Funktionselement in die zugehörige Aufnahme der Vorrichtung eingelegt wird. Diese Aufnahme kann dabei beispielsweise eine Negativkontur der Funktionselemente aufweisen, so dass diese darin winkelgenau aufgenommen werden können. Ebenfalls ist denkbar, dass die Aufnahme einen Anschlag aufweist, welcher ein Verdrehen des jeweiligen Funktionselements nur bis zu einer exakt vordefinierten Winkellage erlaubt. In einem weiteren Verfahrensschritt wird nun der Reitstock so weit in die Nabe gefahren, bis die Zentrierelemente in der Nabe liegen. Anschließend wird die Welle mittels des Führungsschlittens an den Zentrierkonus des Reitstocks herangefahren, so dass der Zentrierkonus zumindest teilweise in die Welle ragt und zugleich axial verschoben wird und dadurch die Zentrierelemente gegen die Nabe des Funktionselements verspannt. Anschließend wird der Reitstock samt Funktionselement in die richtige Winkellage verdreht, woraufhin die Welle durch das Funktionselement geschoben werden kann. Zur Fixierung der thermischen Fügeverbindung wird nun ein das Funktionselement auf der Welle fixierender Temperaturausgleich abgewartet, so dass in einem letzten Verfahrensschritt die Welle samt darauf fixiertem Funktionselement aus der Vorrichtung entnommen werden kann. Der erste Verfahrensschritt, nämlich das Kühlen der Welle bzw. das Erwärmen des zumindest einen Funktionselements, muss dabei selbstverständlich nicht als erstes ausgeführt werden, sondern kann auch noch kurz vor dem eigentlichen Fügen mit der Welle erfolgen.

Sollen mehrere derartige Funktionselemente mit einer zuvor beschriebenen Vorrichtung auf einer Welle gefügt werden, bietet sich das alternative, im Folgende beschriebene Verfahren an, bei dem wiederum zunächst die Welle gekühlt und/oder die Funktionselemente erhitzt werden. Anschließend werden die Funktionselemente in vertikal übereinander angeordneten Aufnahmen der Vorrichtung mit fluchtenden Naben eingelegt, woraufhin der Reitstock von unten durch sämtliche Naben der Funktionselemente hindurchgefahren wird. Nunmehr kann die Welle mittels des Führungsschlittens an den Zentrierkonus des Reitstocks herangefahren werden, so dass sich der Zentrierkonus axial verschiebt und die Zentrierelemente ausgefahren werden. Im gleichen Verfahrensschritt erfolgt auch eine Zentrierung der vielleicht noch geringfügig exzentrisch angeordneten Welle. Im nachfolgenden Verfahrensschritt wird der Reitstock samt der Welle nach unten verfahren und dabei der Reitstock zugleich gedreht. Die Welle wird jedoch nicht gedreht. Bei Erreichen einer Nabe verklemmen nunmehr die Zentrierelemente in derselben, so dass bei einem Verdrehen des Reitstocks auch das nunmehr zugehörige Funktionselement in seiner Aufnahme verdreht wird, bis es winkelgenau gegen einen vordefinierten Anschlag stößt. Anschließend wird die Welle durch sämtliche Funktionselemente geschoben, wobei bei Erreichen des jeweils nächsten Funktionselements dieses stets durch ein Verdrehen des Reitstocks bei gleichzeitig in der Nabe verklemmten Zentrierelementen hinsichtlich seiner Winkellage ausgerichtet wird. Um die thermische Fügeverbindung vollenden zu können, wird nunmehr noch ein fixierender Temperaturausgleich abgewartet, bis die Welle samt darauf fixierter Funktionselemente aus der Vorrichtung entnommen werden kann. Hierdurch lässt sich ebenfalls ein äußerst exaktes und zugleich prozessoptimiertes Fügen erreichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine schematische Darstellung einer erfindungsgemäßen Vorrichtung,
- Fig. 2a-d: einzelne Verfahrensschritte beim Fügen mehrerer Nocken mit der erfindungsgemäßen Vorrichtung,
- Fig. 2e: eine Draufsicht auf einen Reitstock mit teilweise ausgefahrenen Zentrierelementen,
- Fig. 3a-e: ein erfindungsgemäßes Verfahren zum Fügen eines Einzelnockens mit der erfindungsgemäßen Vorrichtung,
- Fig. 4 und 5: unterschiedliche Ausführungsformen einer Reitstockspitze mit Zentrierkonus und Zentrierelement.

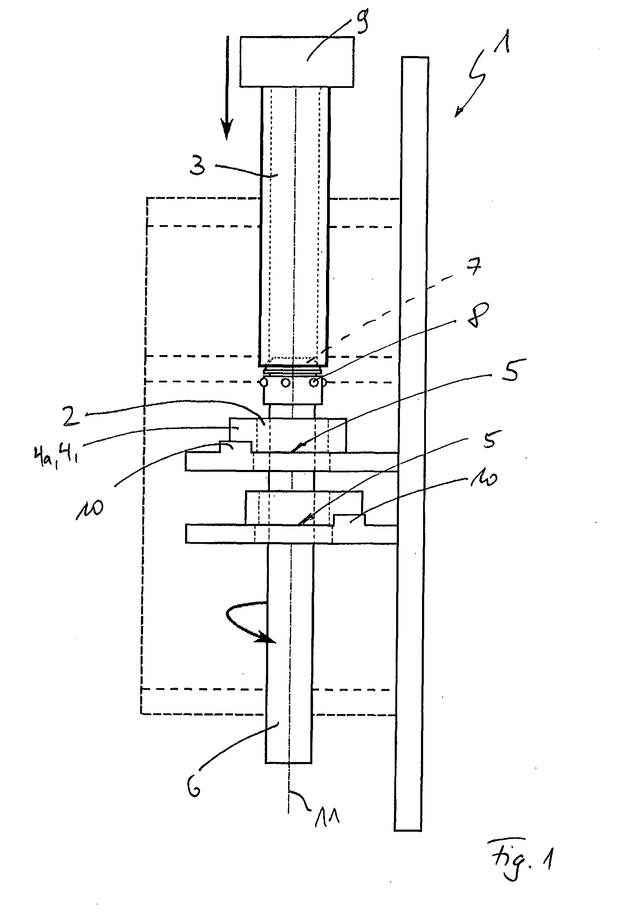

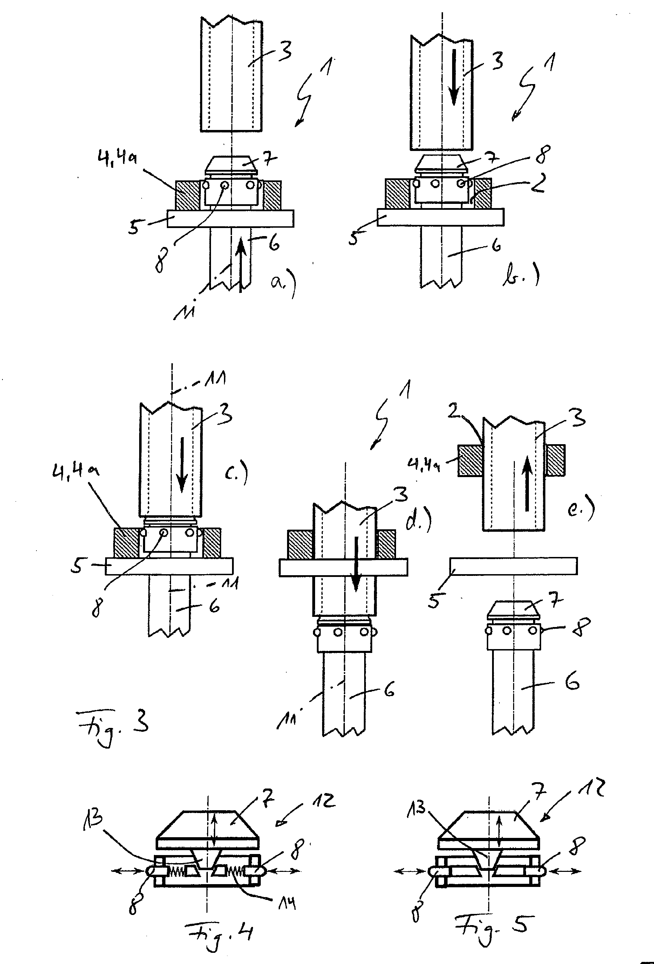

Entsprechend der Fig. 1, weist eine erfindungsgemäße Vorrichtung 1 zur Positionierung zumindest eines eine Nabe 2 für eine Welle 3 aufweisenden Funktionselements 4, beispielsweise eines Nockens 4a, in einer vordefinierten Winkelposition auf der Welle 3 zumindest eine für ein Funktionselement 4 bestimmte Aufnahme 5 auf. Ebenso weist die erfindungsgemäße Vorrichtung 1 einen Reitstock 6 zur koaxialen Ausrichtung der Welle 3 in Bezug auf die Nabe 2 des zumindest einen Funktionselements 4 auf. Der Reitstock 6 besitzt dabei an seiner der Welle 3 zugewandten Spitze einen axial in Bezug auf den Reitstock 6 verstellbaren Zentrierkonus 7 für die Welle 3, sowie expandierbare Zentrierelemente 8 zum Zentrieren des Funktionselements 4, beispielsweise des Nockens 4a, wobei der Zentrierkonus 7 derart mit den Zentrierelementen 8 gekoppelt ist, dass bei einem axialen Verstellen des Zentrierkonus 7 die Zentrierelemente 8 in Radialrichtung bewegt werden. Eine derartige Kopplung ist beispielsweise in den Figuren 4 und 5 gezeigt. In einer ausgefahrenen Stellung sind die Zentrierelemente 8 gegen die Nabe 2 im Funktionselement 4 verspannt und fixieren dieses dadurch. Darüber hinaus weist die erfindungsgemäße Vorrichtung 1 einen verfahrbaren Führungsschlitten 9 für die Welle 3 auf, mittels welchem die Welle 3 von oben durch die Nabe 2 bzw. die Aufnahme 5 geschoben und dadurch die Funktionselemente 4, 4a auf der Welle 3 gefügt werden können. Bei der gemäß der Fig. 1 dargestellten Vorrichtung 1 sind insgesamt zwei Aufnahmen 5 vorgesehen, die jeweils einen Anschlag 10 aufweisen, der ein Verdrehen des jeweils in der Aufnahme 5 aufgenommenen Funktionselements 4 lediglich bis zu einer vordefinierten Winkellage erlaubt. Alternativ hierzu kann die Aufnahme 5 selbstverständlich auch eine zumindest teilweise Negativkontur der Funktionselemente 4, 4a aufweisen, so dass diese pass- und winkelgenau darin aufgenommen werden können. Die Funktionselemente 4 können beispielsweise als Ausgleichsmassen, Zahnräder, Geberräder aber auch Nocken 4a ausgebildet sein.

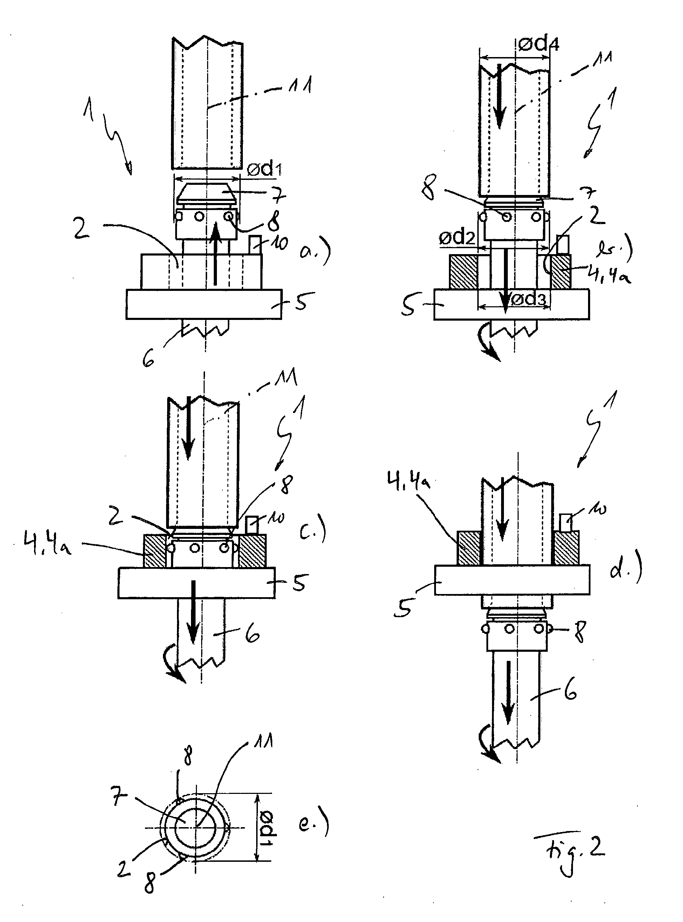

Betrachtet man die Fig. 2e, so kann man erkennen, dass zumindest drei Zentrierelemente 8 vorgesehen sind, die vorzugsweise gleichmäßig aus- bzw. eingefahren werden und dadurch eine exakte Zentrierung der Nabe 2 und über diese des Funktionselements 4 bezüglich einer Achse 11 ermöglichen, wobei die Achse 11 zugleich die Achse des Reitstocks 6, der Welle 3 sowie der Nabe 2 ist.

Zum Verstellen der Zentrierelemente 8 kann eine Verstellmechanik 12 vorgesehen sein, wie diese beispielsweise gemäß den Figuren 4 und 5 dargestellt ist, wobei selbstverständlich auch eine nicht gezeigte hydraulische oder pneumatische Stelleinrichtung vorstellbar ist. Die Verstellmechanik 12 kann beispielsweise einen am Zentrierkonus 7 angeordneten Spreizkonus 13 umfassen, der bei einem Niederdrücken des Zentrierkonus 7 die Zentrierelemente 8 in Radialrichtung, d.h. orthogonal zur Achse 11, nach außen verstellt. Durch die abgerundete äußere Spitze der Zentrierelemente 8 werden diese bei einer Entlastung des Zentrierkonus 7 und bei gleichzeitigem Verschieben des Reitstocks 6 selbsttätig wieder durch Anstoßen beispielsweise an eine Nabe 2 radial nach innen zurückverstellt. Ebenfalls vorgesehen sein kann eine Federeinrichtung 14, die zumindest ein Zentrierelement 8, vorzugsweise sämtliche Zentrierelemente 8, mit einer vordefinierten Anpresskraft an die Nabe 2 des Funktionselements 4 drückt.

Gemäß den Figuren 2a bis 2d sind nun einzelne Verfahrensschritte zum thermischen Fügen einer Welle 3 mit mehreren, jeweils eine Nabe 2 für die Welle 3 aufweisenden Funktionselementen 4, beispielsweise Nocken 4a, mittels der in der Fig. 1 dargestellten Vorrichtung 1 beschrieben. Bei dem erfindungsgemäßen Verfahren werden zunächst die Welle 3 bzw. das Funktionselement 4 erhitzt, um den thermischen Fügevorgang überhaupt erst zu ermöglichen. Anschließend werden die Funktionselemente 4 in vertikal übereinander angeordnete Aufnahmen 5 der Vorrichtung 1 mit zueinander fluchtenden Naben 2 eingelegt. Gemäß der Fig. 2a wird nun der Reitstock 6 von unten durch sämtliche Naben 2 der Funktionselemente 4 gefahren, wobei in den Figuren 2a bis 2d lediglich eines der Funktionselemente 4 dargestellt ist. Ein Außendurchmesser d1 der eingefahrenen Zentrierelemente 8 ist dabei kleiner als ein Innendurchmesser d2 der Nabe 2, so dass der Reitstock 6 mit seiner Zentrierspitze berührungslos durch die Nabe 2 gefahren werden kann. Anschließend wird die Welle 3 mit dem Führungsschlitten 9 auf den Zentrierkonus 7 aufgesetzt, wodurch die Zentrierelemente 8 radial nach außen verfahren werden. Gleichzeitig wird die Welle 3 zusammen mit dem Reitstock 6 nach unten verfahren, bis die Zentrierelemente 8 in der Nabe 2 des Funktionselements 4 verspreizt sind, wobei ein gleichzeitiges Drehen des Reitstocks 6 gemäß den Figuren 2b und 2c stattfindet, wodurch das über die Zentrierelemente 8 verklemmte Funktionselement 4 in der Aufnahme 5 so weit verdreht wird, bis es an den Anschlag 10 anstößt und dadurch seine winkelgenaue Ausrichtung erhält. Anschließend werden die Welle 3 und der Reitstock 6 weiter nach unten verfahren, wodurch die Welle 3 durch die Nabe 2 des Funktionselements 4 geschoben wird. Nun wiederholt sich der Vorgang gemäß den Figuren 2b bis 2d so lange, bis die Welle 3 durch sämtliche Funktionselemente 4 geschoben ist, wobei der Reitstock 6 permanent gedreht wird, um jedes neu aufgenommene Funktionselement 4 vor dem eigentlichen Fügen mit der Welle 3 in seine exakte Winkelstellung verdrehen zu können. Nun muss lediglich noch der die Fügeverbindung fixierende Temperaturausgleich abgewartet werden, um abschließend die Welle 3 samt darauf fixierter Funktionselemente 4 aus der Vorrichtung 1 entnehmen zu können.

Betrachtet man die Durchmesser d1 und d2 der Figuren 2a und 2b, so ist klar erkennbar, dass der Durchmesser d1 kleiner ist als der Durchmesser d3. d3 bezeichnet dabei den Nabendurchmesser des erwärmten Funktionselements 4. d4 ist dabei der Durchmesser des Fügesitzes auf der Welle 3. Generell gelten die Beziehungen d2>d3, wobei d3<d4 sein muss. Das Spiel zwischen ausgefahrenen Zentrierelementen 8 und Nabe 2 ist dabei kleiner als das Fügespiel zwischen erwärmten Funktionselementen 4 und Welle 3.

Betrachtet man demgegenüber die Figuren 3a bis 3e, so ist hier ein alternatives Verfahren zum thermischen Fügen einer Welle 3 einem eine Nabe 2 für die Welle 3 aufweisenden Funktionselement 4, beispielsweise einem Nocken 4a, mittels der gemäß der Fig. 1 dargestellten Vorrichtung gezeigt. Auch bei diesem Verfahren wird die Welle 3 zunächst gekühlt bzw. das Funktionselement 4 erhitzt, wobei dann das Funktionselement 4 in die zugehörige Aufnahme 5 der Vorrichtung 1 eingelegt wird. Anschließend wird der Reitstock 6 von unten so weit in die Nabe 2 hineingefahren, bis die Zentrierelemente 8 in der Nabe 2 liegen. Anschließend wird mittels des Führungsschlittens 9 die Welle 3 von oben auf den Zentrierkonus 7 aufgesetzt, wodurch ein Ausfahren der Zentrierelemente 8 und gleichzeitig ein Verspannen derselben in der Nabe 2 erfolgt. Dies ist gemäß der Fig. 3c dargestellt. Im Verfahrensschritt gemäß der Fig. 3d wird nun die Welle 2 durch die Nabe 2 des Funktionselements 4 geschoben, woraufhin nach einem entsprechenden Temperaturausgleich im Verfahrensschritt gemäß der Fig. 3e die Welle nach oben aus der Aufnahme 5 mit darauf fixiertem Funktionselement 4 gezogen werden kann. In diesem Fall besitzt die Aufnahme 5 beispielsweise eine zumindest teilweise Negativkontur des Funktionselements 4, so dass dieses winkelgenau in der Aufnahme 5 aufgenommen werden kann.

Bei beiden zuvor beschriebenen Verfahren muss selbstverständlich das Kühlen der Welle 3 bzw. das Erhitzen des Funktionselements 4 nicht zu Beginn erfolgen, sondern es kann auch in einem Zwischenverfahrensschritt erfolgen oder beispielsweise durch eine heizbare Aufnahme 5.

Mit der erfindungsgemäßen Vorrichtung 1 und insbesondere mit den erfindungsgemäßen Verfahren lässt sich der Fügeprozess von Funktionselementen 4, beispielsweise Nocken 4a, auf einer zugehörigen Welle 3, beispielsweise einer Nockenwelle, deutlich prozesssicherer gestalten.

## Patentansprüche

1. Vorrichtung (1) zur Positionierung zumindest eines eine Nabe (2) für eine Welle (3) aufweisenden Funktionselements (4), insbesondere eines Nockens (4a), in einer vorbestimmten Winkelposition auf der Welle (3), wobei die Vorrichtung (1) zumindest eine für ein Funktionselement (4) bestimmte Aufnahme (5) aufweist,
**dadurch gekennzeichnet,**
- **dass** ein Reitstock (6) zur koaxialen Ausrichtung der Welle (3) in Bezug auf die Nabe (2) des zumindest einen Funktionselements (4) vorgesehen ist,
- **dass** der Reitstock (6) einen axial in Bezug auf den Reitstock (6) verstellbaren Zentrierkonus (7) für die Welle (3) und expandierbare Zentrierelemente (8) zum Zentrieren des Funktionselements (4) aufweist, wobei der Zentrierkonus (7) derart mit den Zentrierelementen (8) gekoppelt ist, dass bei einem axialen Verstellen des Zentrierkonus (7) die Zentrierelemente (8) in Radialrichtung bewegt werden,
- **dass** die Zentrierelemente (8) in einer ausgefahrenen Stellung eine definierte Position gegen die Nabe (2) im Funktionselement (4) einnehmen,
- ein verfahrbarer Führungsschlitten (9) für die Welle (3) vorgesehen ist.

2. Vorrichtung nach Anspruch 1,
**dadurch gekennzeichnet,**
**dass** die vordefinierte Position der ausgefahrenen Zentrierelemente (8) ein Spiel zur Nabe (2) im Funktionselement (4) erlaubt, das kleiner ist als das Spiel zwischen der Nabe (2) im Funktionselement (4) und der Welle (3).

3. Vorrichtung nach Anspruch 1,
**dadurch gekennzeichnet,**
**dass** die Zentrierelemente (8) in einer ausgefahrenen Stellung gegen die Nabe (2) im Funktionselement (4) verspannt sind und dieses fixieren.

4. Vorrichtung nach einem der vorhergehenden Ansprüche,
**dadurch gekennzeichnet,**
**dass** zumindest drei Zentrierelemente (8) vorgesehen sind.

5. Vorrichtung nach einem der vorhergehenden Ansprüche,
**dadurch gekennzeichnet,**
**dass** zum Verstellen der Zentrierelemente (8) eine Verstellmechanik (12) oder eine hydraulische oder pneumatische Stelleinrichtung vorgesehen ist.

6. Vorrichtung nach einem der vorherigen Ansprüche,
**dadurch gekennzeichnet,**
**dass** eine Federeinrichtung (14) vorgesehen ist, die zumindest ein Zentrierelement (8) mit vordefinierter Kraft gegen die Nabe (2) vorspannt.

7. Vorrichtung nach einem der Ansprüche 1 bis 6,
**dadurch gekennzeichnet,**
- **dass** die Aufnahme (5) eine zumindest teilweise Negativkontur der Funktionselemente (4) aufweist, so dass diese winkelgenau darin aufgenommen sind, oder
- **dass** die Aufnahme (5) einen Anschlag (10) aufweist und der Reitstock (6) drehbar ist.

8. Vorrichtung nach einem der Ansprüche1 bis 7,
**dadurch gekennzeichnet,**
**dass** die Funktionselemente (4) als Ausgleichsmassen, Zahnrädern oder Lager ausgebildet sind.

9. Verfahren zum thermischen Fügen einer Welle (3) mit zumindest einem eine Nabe (2) für die Welle (3) aufweisenden Funktionselement (4), insbesondere einem Nocken (4a), mittels einer Vorrichtung (1) nach einem der vorhergehenden Ansprüche, bei dem
- die Welle (3) gekühlt und/oder das Funktionselement (4) erhitzt werden,
- das Funktionselement (4) in die zugehörige Aufnahme (5) der Vorrichtung (1) eingelegt wird,
- der Reitstock (6) soweit in die Nabe (2) gefahren wird, bis die Zentrierelemente (8) in der Nabe (2) liegen,
- die Welle (3) mittels dem Führungsschlitten (9) an den Zentrierkonus (7) des Reitstocks (6) herangefahren wird, so dass sich der Zentrierkonus (7) axial verschiebt und die Zentrierelemente (8) gegen die Nabe (2) des Funktionselements (4) verspannt werden,
- der Reitstock (6) samt Funktionselement (4) in die richtige Winkellage verdreht werden,
- die Welle (3) durch das Funktionselement (4) geschoben wird,
- ein das Funktionselement (4) auf der Welle (3) fixierender Temperaturausgleich abgewartet wird,
- die Welle (3) samt darauf fixiertem Funktionselement (4) aus der Vorrichtung (1) entnommen wird.

10. Verfahren zum thermischen Fügen einer Welle (3) mit mehreren jeweils eine Nabe (2) für die Welle (3) aufweisenden Funktionselementen (4), insbesondere einem Nocken (4a), mittels einer Vorrichtung (1) nach einem der Ansprüche 1 bis 6, bei dem
- die Welle (3) gekühlt und/oder die Funktionselemente (4) erhitzt werden,
- die Funktionselemente (4) in vertikal übereinander angeordnete Aufnahmen (5) der Vorrichtung (1) mit fluchtenden Naben (2) eingelegt werden,
- der Reitstock (6) von unten durch sämtliche Naben (2) der Funktionselemente (4) gefahren wird,
- die Welle (3) mittels dem Führungsschlitten (9) an den Zentrierkonus (7) des Reitstocks (6) herangefahren wird, so dass sich der Zentrierkonus (7) axial verschiebt und die Zentrierelemente (8) ausgefahren werden,
- der Reitstock (6) samt Welle (3) nach unten verfahren und der Reitstock (6) zugleich gedreht wird, wobei die Zentrierelemente (8) bei Erreichen einer Nabe (2) in dieser verklemmen und das zugehörige Funktionselement (4) in seiner Aufnahme (5) gegen winkelgenau einen Anschlag (10) verdrehen,
- die Welle (3) durch sämtliche Funktionselemente (4) geschoben wird,
- ein die Funktionselemente (4) auf der Welle (3) fixierender Temperaturausgleich abgewartet wird,
- die Welle (3) samt darauf fixierter Funktionselemente (4) aus der Vorrichtung (1) entnommen werden.

11. Verfahren nach Anspruch 9 oder 10,
**dadurch gekennzeichnet,**
**dass** die Funktionselemente (4) in den Aufnahmen (5) oder extern erhitzt werden.

## Claims

1. Device (1) for positioning at least one functional element (4) having a hub (2) for a shaft (3), particularly a cam (4a), in a predefined angular position on the shaft (3), the device (1) comprising at least one holder (5) intended for a functional element (4), **characterised in that**
- a tailstock (6) is provided for coaxially aligning the shaft (3) in relation to the hub (2) of the at least one functional element (4),
- the tailstock (6) comprises a centring cone (7) for the shaft (3), said cone (7) being axially displaceable in relation to the tailstock (6), and expandable centring elements (8) for centring the functional element (4), the centring cone (7) being coupled to the centring elements (8) such that, when the centring cone (7) is displaced axially, the centring elements (8) are moved in a radial direction,
- in an extended position the centring elements (8) assume a defined position against the hub (2) in the functional element (4),
- a movable guide block (9) for the shaft (3) is provided.

2. Device according to claim 1,
**characterised in that**
the pre-defined position of the centring elements (8) in the extended position includes a clearance from the hub (2) in the functional element (4) which is less than the clearance between the hub (2) in the functional element (4) and the shaft (3).

3. Device according to claim 1,
**characterised in that**
in an extended position the centring elements (8) are braced against the hub (2) in the functional element (4) and secure the latter in place.

4. Device according to one of the preceding claims,
**characterised in that**
at least three centring elements (8) are provided.

5. Device according to one of the preceding claims,
**characterised in that**
an adjustment mechanism (12) or a hydraulic or pneumatic positioning device is provided for adjusting the centring elements (8).

6. Device according to one of the preceding claims,
**characterised in that**
a spring device (14) is provided which biases at least one centring element (8) against the hub (2) with a pre-defined force.

7. Device according to one of claims 1 to 6,
**characterised in that**
- the holder (5) comprises an at least partially negative contour of the functional elements (4), so that these are accommodated therein in angularly precise manner, or
- the holder (5) comprises a stop (10) and the tailstock (6) is rotatable.

8. Device according to one of claims 1 to 7,
**characterised in that**
the functional elements (4) are configured as balancing weights, gears or bearings.

9. Method for thermally joining a shaft (3) to at least one functional element (4), particularly a cam (4a), comprising a hub (2) for the shaft (3), by means of a device (1) according to one of the preceding claims, wherein
- the shaft (3) is cooled and/or the functional element (4) is heated,
- the functional element (4) is placed in the associated holder (5) of the device (1),
- the tailstock (6) is inserted into the hub (2) until the centring elements (8) are located within the hub (2),
- the shaft (3) is moved up to the centring cone (7) of the tailstock (6) by means of the guide block (9), so that the centring cone (7) is axially displaced and the centring elements (8) are braced against the hub (2) of the functional element (4),
- the tailstock (6) together with the functional element (4) is rotated into the correct angular position,
- the shaft (3) is pushed through the functional element (4),
- there is a delay for the temperature to equalise in order to fix the functional element (4) on the shaft (3),
- the shaft (3) together with the functional element (4) fixed thereon is removed from the device (1).

10. Method for thermally joining a shaft (3) with a plurality of functional elements (4), particularly a cam (4a), each comprising a hub (2) for the shaft (3), by means of a device (1) according to one of claims 1 to 6, wherein
- the shaft (3) is cooled and/or the functional elements (4) are heated,
- the functional elements (4) are placed in holders (5) in the device (1) arranged vertically above one another with their hubs (2) aligned,
- the tailstock (6) is moved from below through all the hubs (2) of the functional elements (4),
- the shaft (3) is moved up to the centring cone (7) of the tailstock (6) by means of the guide block (9), so that the centring cone (7) moves axially along and the centring elements (8) are moved into an extended position,
- the tailstock (6) together with the shaft (3) are moved downwards and at the same time the tailstock (6) is rotated, while on reaching a hub (2) the centring elements (8) are jammed into it and rotate the associated functional element (4) in its holder (5) against a stop (10) in angularly precise manner,
- the shaft (3) is pushed through all the functional elements (4),
- there is a delay for the temperature to equalise in order to fix the functional elements (4) on the shaft (3),
- the shaft (3) together with the functional elements (4) fixed thereon is removed from the device (1).

11. Method according to claim 9 or 10,
**characterised in that**
the functional elements (4) are heated in the holders (5) or externally.

## Revendications

1. Dispositif (1) pour positionner au moins un élément fonctionnel (4) présentant un moyeu (2) pour un arbre (3), en particulier une came (4a), dans une position angulaire prédéterminée sur l'arbre (3), dans lequel le dispositif (1) présente au moins un logement (5) destiné à un élément fonctionnel (4),
**caractérisé en ce que** :
- une contre-poupée (6) est prévue pour orienter coaxialement l'arbre (3) par rapport au moyeu (2) du au moins un élément fonctionnel (4) ;
- la contre-poupée (6) présente un cône de centrage (7) réglable sur la contre-poupée (6) pour l'arbre (3) et des éléments de centrage extensibles (8) pour centrer l'élément fonctionnel (4), dans lequel le cône de centrage (7) est couplé aux éléments de centrage (8) de sorte que, lors d'un déplacement axial du cône de centrage (7), les éléments de centrage (8) soient déplacés dans la direction radiale,
- les éléments de centrage (8) adoptent en position déployée une position définie contre le moyeu (2) dans l'élément fonctionnel (4), et
- il est prévu pour l'arbre (3) un chariot de guidage déplaçable (9).

2. Dispositif selon la revendication 1,
**caractérisé en ce que** :
la position prédéfinie des éléments de centrage déployés (8) permet un jeu avec le moyeu (2) de l'élément fonctionnel (4) qui est plus petit que le jeu entre le moyeu (2) de l'élément fonctionnel (4) et l'arbre (3).

3. Dispositif selon la revendication 1,
**caractérisé en ce que** :
les éléments de centrage (8) sont contraints en position déployée contre le moyeu (2) de l'élément fonctionnel (4) et fixent ce dernier.

4. Dispositif selon l'une quelconque des revendications précédentes,
**caractérisé en ce que** :
il est prévu au moins trois éléments de centrage (8).

5. Dispositif selon l'une quelconque des revendications précédentes,
**caractérisé en ce que** :
il est prévu une mécanique de réglage (12) ou un dispositif de réglage hydraulique ou pneumatique pour déplacer les éléments de centrage (8).

6. Dispositif selon l'une quelconque des revendications précédentes,
**caractérisé en ce que** :
il est prévu un dispositif à ressort (14) qui précontraint au moins un élément de centrage (8) avec une force prédéfinie contre le moyeu (2).

7. Dispositif selon l'une quelconque des revendications 1 à 6,
**caractérisé en ce que** :
- le logement (5) présente un contour au moins en partie négatif des éléments fonctionnels (4) de sorte que ceux-ci y soient reçus de manière précise au plan angulaire ou
- le logement (5) présente une butée (10) et la contre-poupée (6) est rotative.

8. Dispositif selon l'une quelconque des revendications 1 à 7,
**caractérisé en ce que** :
les éléments fonctionnels (4) sont conçus sous la forme de masses d'équilibrage, de roues dentées ou de paliers.

9. Procédé de jonction thermique d'un arbre (3) avec au moins un élément fonctionnel (4) présentant un moyeu (2) pour l'arbre (3), en particulier une came (4a), au moyen d'un dispositif (1) selon l'une quelconque des revendications précédentes, dans lequel :
- l'arbre (3) est refroidi et/ou l'élément fonctionnel (4) est chauffé,
- l'élément fonctionnel (4) est inséré dans le logement correspondant (5) du dispositif (1),
- la contre-poupée (6) est déplacée dans le moyeu (2) assez largement pour que les éléments de centrage (8) se trouvent dans le moyeu (2),
- l'arbre (3) est déplacé à l'aide du chariot de guidage (9) sur le cône de centrage (7) de la contre-poupée (6) de sorte que le cône de centrage (7) se déplace axialement et que les éléments de centrage (8) soient pressés contre le moyeu (2) de l'élément fonctionnel (4),
- la contre-poupée (6) ainsi que l'élément fonctionnel (4) sont contraints dans la position angulaire correcte,
- l'arbre (3) est déplacé par l'élément fonctionnel (4),
- une compensation de température fixant l'élément fonctionnel (4) sur l'arbre (3) est attendue, et
- l'arbre (3) ainsi que l'élément fonctionnel (4) qui y est fixé sont retirés du dispositif (1).

10. Procédé de jonction thermique d'un arbre (3) avec plusieurs éléments fonctionnels (4) présentant respectivement un moyeu (2) pour l'arbre (3), en particulier une came (4a), au moyen d'un dispositif (1) selon l'une quelconque 1 à 6, dans lequel :
- l'arbre (3) est refroidi et/ou les éléments fonctionnels (4) sont chauffés,
- les éléments fonctionnels (4) sont insérés dans des logements (5), aménagés verticalement l'un au-dessus de l'autre, du dispositif (1) avec des moyeux (2) alignés,
- la contre-poupée (6) est déplacée par le bas par tous les moyeux (2) des éléments fonctionnels (4),
- l'arbre (3) est déplacé à l'aide du chariot de guidage (9) sur le cône de centrage (7) de la contre-poupée (6) de sorte que le cône de centrage (7) se déplace axialement et que les éléments de centrage (8) soient déployés,
- la contre-poupée (6) ainsi que l'arbre (3) sont déplacés vers le bas et la contre-poupée (6) tourne simultanément, dans lequel les éléments de centrage (8), lorsqu'ils atteignent un moyeu (2), s'y calent et contraint l'élément fonctionnel concerné (4) dans son logement (5) contre une butée (10) en position angulaire,
- l'arbre (3) est déplacé par tous les éléments fonctionnels (4),
- une compensation de température fixant les éléments fonctionnels (4) sur l'arbre (3) est attendue, et
- l'arbre (3) ainsi que les éléments fonctionnels (4) qui y sont fixés sont retirés du dispositif (1).

11. Procédé selon la revendication 9 ou la revendication 10,
**caractérisé en ce que** :
les éléments fonctionnels (4) sont chauffés dans les logements (5) ou à l'extérieur.
